Europäisches Patentamt

European Patent Office

Office européen des brevets

(11) Veröffentlichungsnummer: **0 175 006**
**B1**

## (12) EUROPÄISCHE PATENTSCHRIFT

(45) Veröffentlichungstag der Patentschrift:
**09.03.88**

(21) Anmeldenummer: **84111026.5**

(22) Anmeldetag: **15.09.84**

(51) Int. Cl.⁴: **F 16 J 15/52,** F 04 D 13/02,
B 63 B 27/24

(54) Gasdichte Schottwand-Drehdurchführung.

(43) Veröffentlichungstag der Anmeldung:
**26.03.86 Patentblatt 86/13**

(45) Bekanntmachung des Hinweises auf die Patenterteilung:
**09.03.88 Patentblatt 88/10**

(84) Benannte Vertragsstaaten:
**CH DE GB LI NL**

(56) Entgegenhaltungen:
**DE - A - 2 261 643
DE - A - 2 301 961
GB - A - 882 137**

(73) Patentinhaber: **Liquid Gas International
Ingenieurgesellschaft mbH, Am Fronhof 1,
D-5300 Bonn 2 (Bad Godesberg) (DE)**

(72) Erfinder: **Neugebauer, Alfred, Dr.-Ing., Frankenweg 24,
D-5340 Bad Honnef 1 (DE)**

(74) Vertreter: **Allgeier, Kurt et al, Friedrichstrasse 24,
D-7888 Rheinfelden (DE)**

**Beschreibung**

Die Erfindung betrifft eine gasdichte Schottwand-Drehdurchführung gemäss dem Oberbegriff von Anspruch 1. Eine derartige druckschriftlich nicht belegbare Anordnung wird üblicherweise seit langem im Schiffbau gewählt. Beispielsweise kommen Antriebsanordnungen mit Drehdurchführungen dieser Art auf Schiffen zum Transport von Flüssiggasen vor, die mit Rückverflüssigungskompressoren ausgerüstet sind. Bei diesen Schiffen schreiben die Klassifikationsgesellschaften vor, dass bei drehenden Wellen gegen Gehäuse- oder Schottwände eine gasdichte Dichtung mit ausreichender Schmierung angeordnet und dauerhafte Gasdichtigkeit sichergestellt werden muss.

Abdichtungen dieser Art müssen mehreren technischen Anforderungen genügen. Alle Konstruktions- und Aussteifungselemente des Schiffes, also Schiffsboden (Kiel) und Spanten, Längs- und Querschotte des Unter- und Überwasserkörpers einschliesslich der Decksaufbauten sind, insbesondere bei schwerer See, dauernd starken Biegekräften ausgesetzt, die sich als elastische oder auch plastische Formveränderungen des Schiffskörpers und aller seiner Verbände auswirken. Daher treten unvermeidlich statische und dynamische Änderungen der Lage und Form der Maschinenfundamente von Kompressoren und Antriebsaggregaten und der diese trennenden Schottwand auf, die zu Abweichungen von der einjustierten Fluchtung der Antriebswellen führen.

Um Maschinenschäden aufgrund dieser Ursache zu begegnen, ist vorgeschlagen worden, dass die die Schottwand durchdringende, in einem mit Dichtungen versehenen, gegenüber der Schottwand nachgiebig und mittels Flanschen lösbar angebrachten Lagerschild geführte Verbindungswelle durch ein torsionssteifes und biegeweiches Kupplungspaar an- und abtriebsseitig angeschlossen ist.

Den ausserordentlich hohen Anforderungen an dauernd zuverlässiger Dichtheit der Drehdurchführung wird insbesondere dann entsprochen, wenn die Ausbildung der Dichtelemente und ihre umgebenden Bauteile entsprechend zweckmässig vorgesehen und wenn auch Sorge getragen wird, dass die Dichtelemente leicht inspiziert, gewartet und notfalls ausgewechselt werden können. Vor allem kommt es darauf an, dass bei durch Beschädigung oder Verschleiss an den Dichtelementen hervorgerufenen Undichtigkeiten der Drehdurchführung diese durch Einbau von neuen Elementen unverzüglich behoben werden können. Deshalb besteht eine wesentliche Aufgabe der Erfindung darin, den Aufbau der Drehdurchführung so zu gestalten, dass eine rasche Demontage und ein einfaches Auswechseln der beschädigten Teile von auch wenig geübtem Personal vorgenommen werden kann. Dies gilt vor allem für die Anwendung auf Schiffen in Verbindung mit Kompressoren, wo das Auswechseln in einfacher Weise mit Bordmitteln gefordert wird.

Die weitere Aufgabe der Erfindung besteht somit darin, diese Dichtungselemente derart auszubilden, dass sie bei freigelegter Wellenstirnseite leicht und daher rasch ausgebaut und ausgetauscht werden können.

Erfindungsgemäss wird diese Aufgabe durch die im Kennzeichen von Anspruch 1 enthaltenen Merkmale gelöst.

Durch diese Ausbildungsweise ergeben sich verschiedene Möglichkeiten, unter geringstem Aufwand die Drehdurchführung ganz oder teilweise zu demontieren. Die glatte und keinerlei Absätze aufweisende Verbindungswelle kann z.B. nach Lösen der beiden Kupplungs-Antriebs- und Abtriebsflanschen axial nach der einen oder anderen Seite verschoben werden, so dass die Dichtungselemente stirnseitig frei zugänglich sind. Durch Lösen der Flanschverschraubungen des Lagerschildes kann dieses von der Schottwand abgenommen und die von den Kupplungen bereits abgeflanschte Drehdurchführung kann als Ganzes zu Inspektions-, Wartungs- oder Instandsetzungszwecken aus der Schottwand entfernt werden.

Erfindungsgemäss wird weiter vorgeschlagen, dass als Dichtelemente Radial-Wellendichtringe dienen, die in den Lagerkörper an seinen Aussenseiten stirnseitig frei zugänglich eingesetzt sind. Ferner besteht ein weiteres Merkmal darin, dass der Lagerkörper aus dem mit dem Lagerschild verbundenen Lagergehäuse und zwei beidseitig in diesem in einer zylindrischen Bohrung aufgenommenen Gleitlagern besteht, in welchen die Radial-Wellendichtringe in entsprechenden Aufnahmebohrungen eingesetzt sind.

Als Radial-Wellendichtring wird man in der Regel sog. Simmerringe wählen. Im Falle von Abnützung oder Beschädigung sind diese wegen ihrer leichten Zugänglichkeit rasch austauschbar. Zu diesem Zweck werden beidseitig der Verbindungswelle die Kupplungspakete gelöst. Diese können wegen des dafür vorgesehenen radialen Überstandes mit der Hand zusammengedrückt, aus den beiden Sitzen links und rechts gerückt werden und lassen sich dann frei herausheben. Durch axiales Verschieben der glatten, keine Durchmesserunterschiede aufweisenden Welle in den Gleitlagern nach einer Seite, entsteht an der gegenüberliegenden Seite axial soviel Platz, dass nach Lösen des wellenseitigen Kupplungsflansches dieser abgezogen und durch die entstandene Lücke herausgehoben werden kann. Anschliessend kann entweder der Wellendichtring für sich separat gezogen und durch einen neuen ersetzt werden, oder der gesamte Lagerkörper abgezogen, mit dem Kupplungsflansch herausgehoben und nach Reparatur wieder eingesetzt oder gegen ein Ersatzteil (neuer Lagerkörper) ausgetauscht werden. Auf diese Weise reduziert sich die notwendige Demontage der gesamten Schottwand-Drehdurchführung auf den Ausbau der Kupplungspakete (Justierung bleibt erhalten) und den Ausbau nur eines wellenseitigen Kupplungsflansches.

Wenn auch die Betriebsunterbrechung durch diese Wartungs- und Austauscharbeiten zeitlich so kurz als möglich gehalten werden kann, so besteht darüber hinaus das Bestreben diese Wartungs- bzw. Austausch-Intervalle nur in grossen Zeitabständen durchführen zu müssen. Dies kann erreicht werden, wenn die auf die Lager- und Dichtelemente einwirkenden Kräfte, welche diese beschädigen können oder deren Verschleiss erhöhen, so klein als möglich gehalten werden können. Zu diesem Zweck soll die Verbindungswelle einerseits so nachgiebig und mit möglichst grossen Verschiebe- bzw. Verlagerungs-Freiheitsgraden in allen drei Dimensionen durch die Schottwand hindurchgeführt werden, und andererseits sollen die Einwirkungen von Restkräften bzw. Restmomenten so gering als möglich gehalten werden. Diese sind hauptsächlich das Wellen-Eigengewicht, das Reibmoment der Lager, die elastischen Rückstellkräfte der nachgiebigen Lagerbefestigung, sowie Rückwirkungskräfte aus der Wellen-Axialverschiebung.

Die schädliche Kräfteeinleitung durch Verformungen oder Verlagerungen der Schottwand gegenüber den Maschinenfundamenten wird dadurch auf ein Mindestmass verringert, dass unter Zwischenschaltung eines Metall-Axialfaltenbalges mit geringem Rückstellmoment eine selbsteinstellend nachgiebige Verbindung des Lagerkörpers mit dem Lagerschild geschaffen wird. Die weitere Ausbildung ist so getroffen, dass Schmier- und Dichtfunktion von der Kühlfunktion getrennt sind, und zwar dadurch, dass zwischen den beidseitig im Lagerkörper aufgenommenen Gleitlagern eine die Verbindungswelle umgebende Ölkammer gebildet ist, deren Schmierölfüllung die Verbindungswelle allseitig umspült, und dass ferner die Ölkammer von einem Kühlwassermantel umgeben ist, der im Lagerkörper angeordnet ist und mittels entsprechender flexibler Leitungsverbindung an einen Wasserkühlkreislauf mit Zwangsumlauf angeschlossen ist. Auch die erwähnte Ölkammer ist mittels flexibler Leitungen mit einem Ölausdehnungs- und Vorratsgefäss verbunden, welches fest am Lagerschild angeordnet ist. Dadurch wird nahezu drucklos ein langsamer Ölkreislauf durch Konvektion möglich, soweit die Wassermantelkühlung des Öles die Öltemperaturunterschiede nicht völlig ausgleicht.

Durch diese Ausbildungsmerkmale werden im Sinne der Schonung von Lagern und Dichtungen mehrere vorteilhafte Wirkungen erzielt. Infolge der guten Beweglichkeit der Verbindungswelle in allen drei Dimensionen wird die Einleitung von Verlagerungskräften auf ein Minimum reduziert. Die Verbindungswelle läuft im Lager ölüberflutet durch die Ölkammerfüllung, welche die Gleitlager schmiert und an der Abdichtung durch die Radial-Wellendichtringe (in der Regel Simmerringe) teilnimmt. Verschleissteile wie Gleitringdichtungen werden vermieden.

Das durch Wasserkühlung auf Betriebstemperatur gehaltene Schmieröl kühlt zugleich die Lager. Auf dynamische Dichtelemente kann verzichtet werden, und jeglicher Kontakt zwischen Kühlwasser und Verbindungswelle und damit auch eine Korrosionsgefahr wird unterbunden.

Diese Ausbildungsweise ermöglicht es zugleich, die Funktionstüchtigkeit der Drehdurchführung kontinuierlich und selbsttätig zu überwachen. Dies kann erfindungsgemäss dadurch geschehen, dass mittels Temperaturfühler und/oder Öl- und/oder Wasservorratsmessern kontinuierlich die Temperatur des Kühlwassers und/oder des Schmieröls sowie/oder die Vorratsmengen des Schmieröls und/oder des Kühlwassers fernüberwachbar sind und bei Überschreiten von einem der zulässigen Grenzwerte der Antrieb selbsttätig abschaltbar ist.

Vorteilhafterweise sind nach weiteren Erfindungsmerkmalen die erwähnten Gleitlager mit seewasserbeständigem und/oder ammoniakbeständigem Lagermetall versehen, damit eine mögliche Korrosionsgefahr weitgehend ausgeschaltet wird.

Die Drehdurchführung mit den Merkmalen der Erfindung weist gegenüber einzelnen, nicht zum Stand der Technik gehörenden Lösungsvorschlägen ausserordentliche Vorteile auf. Es wird eine mit Absätzen und Nuten versehene Verbindungswelle vermieden und ebenso wird auf eine festverkeilte oder verschraubte Verbindung der beidseitigen Kupplungsflanschen verzichtet. Eine Drehdurchführung mit diesem Aufbau kann nur unter grossen Arbeitsaufwand an der Schottwand abgebaut werden.

Demgegenüber ist es erfindungsgemäss möglich, sowohl die Verbindungswelle einzeln wie auch die Drehdurchführung als Ganzes nach jeder Seite hin von der Schottwand abzubauen, da diese mit einem grossen, birnenförmigen, von dem Lagerschild abgedeckten Schottwandausschnitt versehen ist. Ausserdem finden Wälzlager keine Anwendung und es kann auch von der Einleitung einer besonderen Sperrflüssigket abgesehen werden, deren Abdichtung gegenüber den Wälzlagern zusätzliche Vorkehrungen erfordert. Auch diese Besonderheiten würden einem raschen Ausbau der Verbindungswelle entgegenstehen. Darüber hinaus erfordern die vorgenannten Ausbildungsmerkmale einen erheblichen zusätzlichen technischen Aufwand und die Ringnuten und dgl. Absätze schwächen die Verbindungswelle und ermöglichen die Gefahr von Werkstoffschäden durch Kerbwirkung und die dadurch möglicherweise hervorgerufenen Spannungsrisse.

Ein Ausführungsbeispiel der erfindungsgemässen Schottwand-Drehdurchführung ist in der Zeichnung dargestellt und im folgenden näher erläutert.

Es zeigen die

Fig. 1 einen vertikalen Längsschnitt durch die Schottwand-Drehdurchführung;

Fig. 2 eine weitere vertikale Längsschnittdarstellung der Einzelheiten;

Fig. 3 eine vertikale Querschnittsdarstellung gemäss Fig. 2 in Blickrichtung A;

Fig. 4 Einzelheiten des Längsschnitts gemäss Fig. 1;

Fig. 5 den Ausbau der Schottwand-Drehdurchführung gemäss Fig. 2.

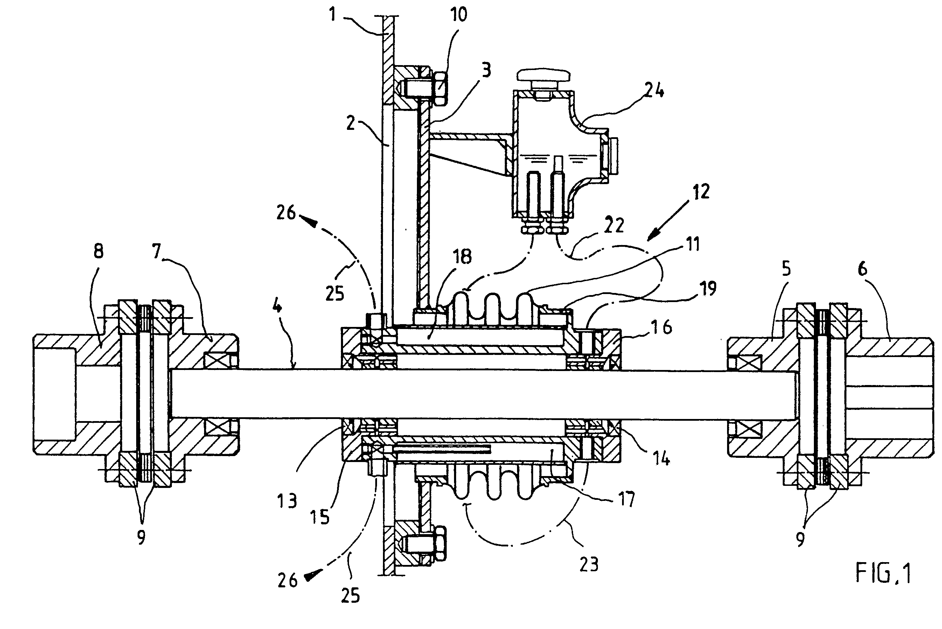

Als Ausführungsbeispiel gemäss Fig. 1 ist die Anwendung der erfindungsgemässen Schottwand-Drehdurchführung auf einem Flüssiggas-Tanker gewählt, bei dem in zwei gasdicht durch eine Schottwand 1 getrennten Räumen — nicht dargestellt — ein Rückverflüssigungskompressor und ein Antriebsmotor angeordnet und durch einen Antriebswellenstrang verbunden sind. Die beiden genannten Aggregate sind mittels der torsionssteifen und biegeweichen Kupplungen 5, 6, 9 und 7, 8, 9 durch die Verbindungswelle 4 miteinander lösbar gekuppelt. Diese bekannten und handelsüblichen Kupplungen sind mit radial überstehenden Kupplungspaketen 9 ausgerüstet, die von Hand zusammendrückbar und aus ihren Sitzen links und rechts herausrückbar und dann frei aushebbar sind. Die wellenseitigen Kupplungsflansche 5, 7 sind mittels reibschlüssiger Befestigungselemente auf der Verbindungswelle 4 leicht lösbar befestigt.

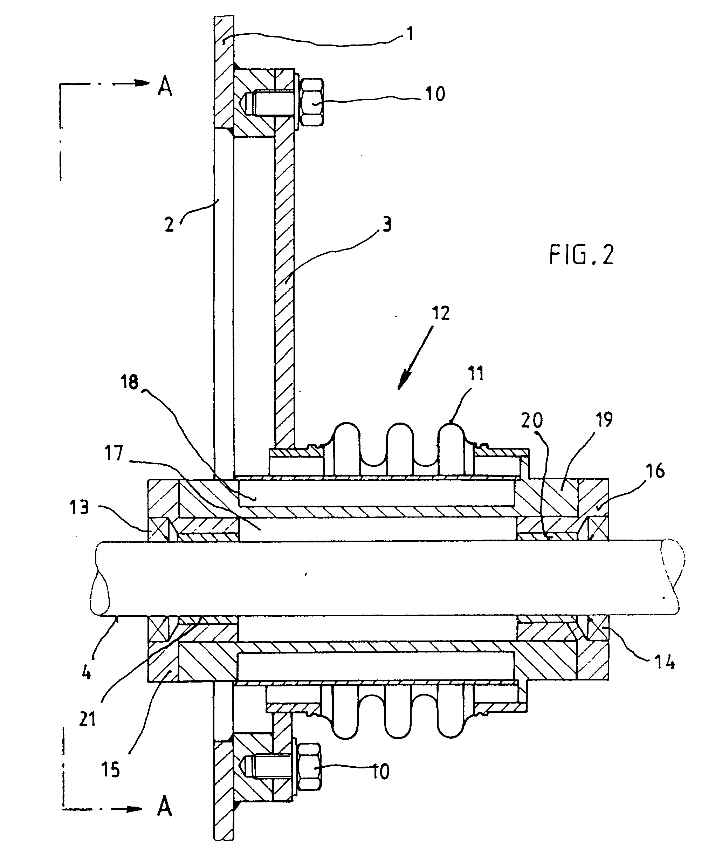

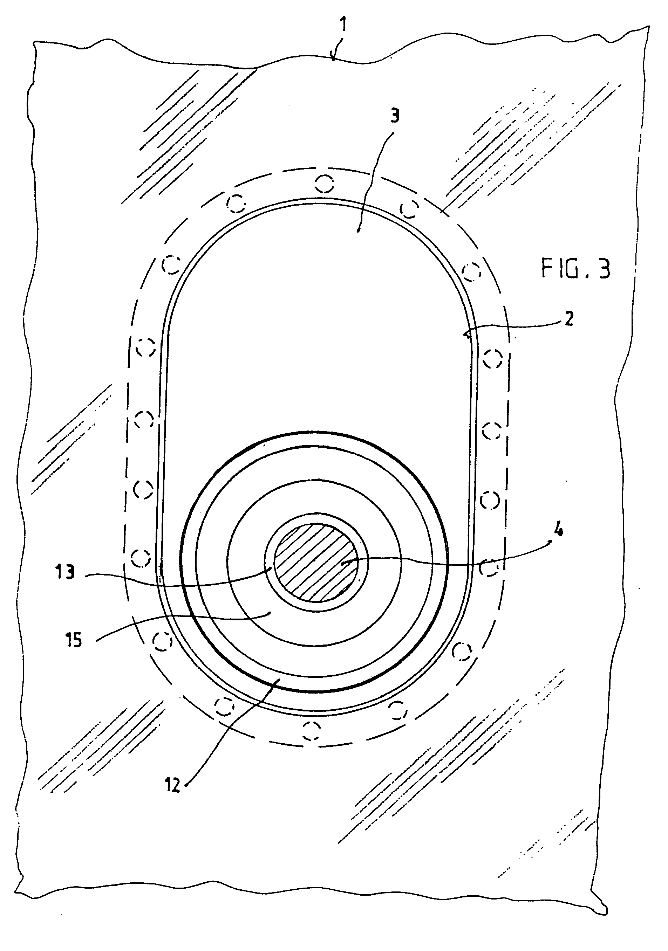

Die Drehdurchführung nach der Erfindung ist mit ihrer Verbindungswelle 4 in einem Lagerkörper 12 angeordnet, der über den Metallfaltenbalg 11 mit dem Lagerschild 3 nachgiebig verbunden ist. Das Lagerschild 3 ist mittels Schrauben 10 an der Schottwand 1 deren Öffnung 2 abdeckend angeflanscht (Fig. 2 und 3).

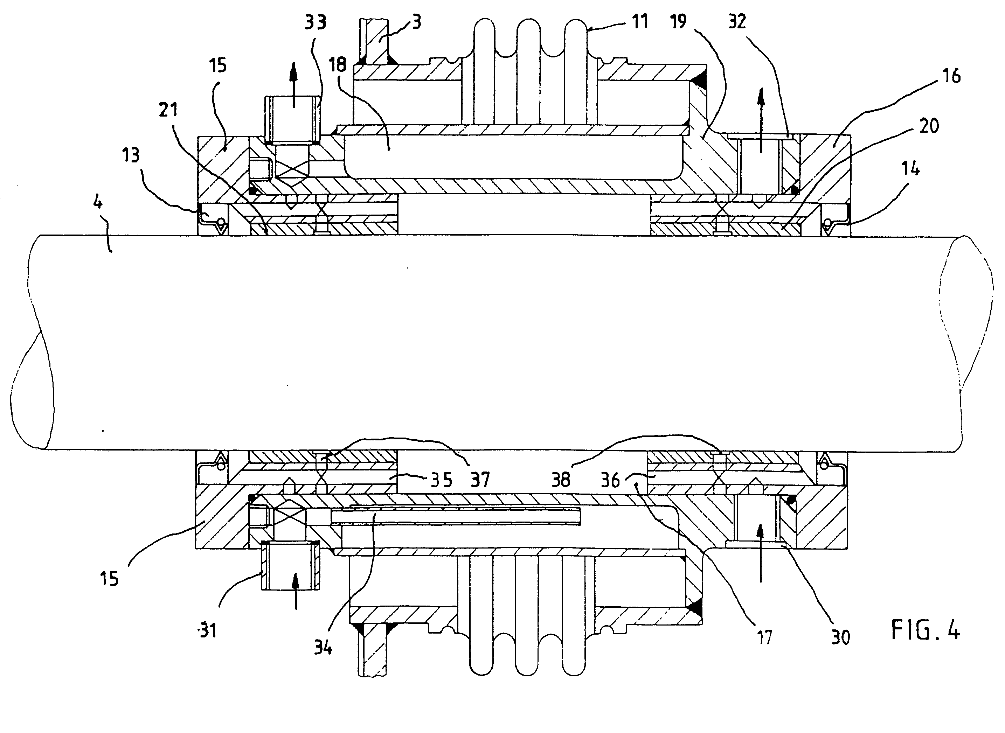

Der Aufbau des Lagerkörpers 12 ist aus Fig. 4 ersichtlich. Dieser ist beidseitig mit den Gleitlagern 15, 16 ausgerüstet, welche in eine Bohrung des Lagergehäuses 19 eingesetzt sind. Zwischen diesen Gleitlagern ist eine die Verbindungswelle 4 umgebende Ölkammer 17 ausgebildet; deren Schmierölfüllung dient der Schmierung der Welle 4 in den Gleitlagern und ferner der Radial-Wellendichtringe — Simmerringe — 13, 14.

Die Ölkammer 17 ist mit dem Eintrittsstutzen 30 und dem Austrittsstutzen 32 versehen, an welche die angedeuteten flexiblen Leitungen 22, 23 angeschlossen sind, die zu einem Ölausdehnungs- und Vorratsgefäss 24 führen, welches am Lagerschild 3 angeordnet ist. Die Ölumwälzung erfolgt durch Konvektion, da sich zwischen der Öltemperatur im Lagerbereich und im Vorratsbereich eine geringfügige Differenz ausbildet. Infolge der Lager- und Dichtungsreibung wird eine abzuführende Wärmeleistung von ca. 200 - 500 Watt erzeugt. Diese Wärme wird zum grössten Teil durch Wasserkühlung des in der Kammer 17 enthaltenen Schmieröls abgeführt. Hierzu dient ein Wassermantel 18, der ebenfalls im Lagergehäuse 19 ausgebildet ist und die Ölkammer 17 umgibt. Der Wassermantel 18 ist mit den Wassereintritts- und Austrittsstutzen 31, 33 versehen; diese sind mittels der angedeuteten Leitungsverbindungen 25 an einem Wasserkühlkreislauf 26 mit Zwangsumlauf angeschlossen. Ein Rohrstutzen 34 dient der gleichmässigeren Wasserverteilung.

Ferner sind in den Gleitlagern 15, 16 Schmierbohrungen 35, 36 und Schmiernuten 37, 38 angebracht, durch welche das Schmiermittel in den Lager-/Wellenbereich und in den Dichtungsbereich geleitet wird.

Die Gleitlager 15, 16 sind mit Lagerschalen 20, 21 aus seewasserbeständigem und/oder ammoniakbeständigem Lagermetall ausgerüstet.

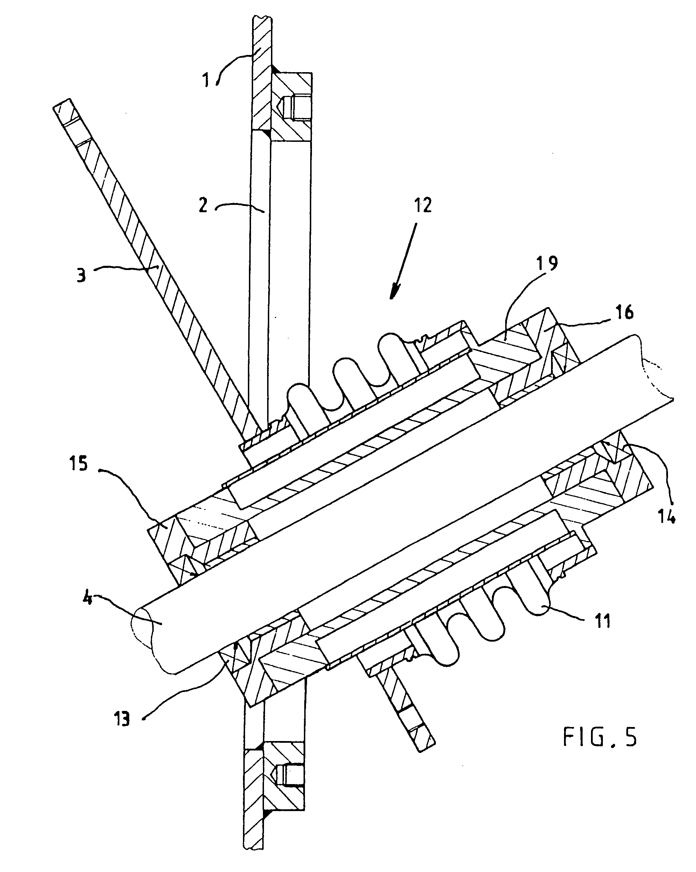

Wie aus der Fig. 5 in Verbindung mit Fig. 1 und 3 hervorgeht, ist es nach dem Lösen und Entfernen der Kupplungsflansche 5 und 7 von der Verbindungswelle 4 möglich, durch Abflanschen des Lagerschildes 3 von der Schottwandöffnung 2 die gesamte Drehdurchführung nicht nur nach der Anbauseite hin abzubauen, sondern durch zweckmässiges Kippen und Schrägstellen auch durch die Schottwandöffnung 2 hindurchzustecken, so dass erforderlichenfalls eine weitere Zugänglichkeit ermöglicht wird, bzw. die Drehdurchführung ganz entfernt und inspiziert bzw. repariert werden kann.

Mit der Erfindung wird eine Schottwand-Drehdurchführung geschaffen, durch welche die schwierigen Aufgaben gelöst werden, die zur Gewährleistung höchster Betriebssicherheit unter allen vorkommenden Einsatzbedingungen gestellt sind. Hohe Betriebssicherheit erfordert nicht nur absolute Dichtigkeit unter normalen Arbeitsbedingungen. Vielmehr muss diese auch in Extremfällen noch sichergestellt sein. Diese kommen in erster Linie bei Anwendung auf Tankschiffen vor, die sich bei schwerem und schwerstem Seegang wie Biegefedern verhalten, so dass alle Verbände und Schottwände in allen Quer- und Längsebenen starken Verformungen ausgesetzt sind. Die Betriebssicherheit erfordert nicht nur eine vollständige Anpassungsfähigkeit der Drehverbindung und der Dichtungen an die Formänderungen, ohne dass Zwängungen bei der Drehmomentübertragung auftreten, sondern auch Aufrechterhaltung der vollen Abdichtungswirkung. Zur Betriebssicherheit gehört es insbesondere, dass Verschleissteile, vor allem Dichtungselemente und Lagerschalen, auf einfache mit Bordmitteln ausführbare und von auch ungeübtem Personal beherrschbare Weise in kurzer Zeit austauschbar sind, so dass bei derartigen Störungen die Betriebsunterbrechungen nicht nur kurzzeitig sind, sondern in ihrer Zeitdauer auch genau eingeplant werden können.

**Patentansprüche**

1. Gasdichte Schottwand-Drehdurchführung, insbesondere zur gasdichten Trennung von zwei Räumen, in denen einerseits ein Antriebsaggregat und andererseits eine von diesem angetriebene Arbeits- oder dgl. Maschine angeordnet sein können, bei welcher die einen Ausschnitt der Schottwand durchdringende, in einem mit Dichtungen versehenen, gegenüber der Schottwand nachgiebig und mittels Flanschen (5, 7) lösbar angebrachten Lagerschild (3) geführte Verbindungswelle mittels an ihren Enden angeordneten Kupplungen (5, 6, 7, 8, 9) an- und abtriebsseitig angeschlossen ist, dadurch gekennzeichnet, dass die an- und abtriebsseitigen, mit der durchgehend glatt zylindrischen Verbindungswelle (4) torsionsfest, jedoch betriebsmässig leicht lösbar verbundenen Flanschen (5, 7) der torsionssteifen und biegeweichen Kupplungen (5, 6, 7, 8, 9) von dieser bei eingebauter Schottwand-Drehdurchführung entfernbar sind, und dass der axial und radial nachgiebig am Lagerschild (3) angebrachte Lagerkörper (12) mittels Gleitlagern (15, 16) auf der Verbindungswelle (4) axial frei verschiebbar und gegenüber dieser mittels Radial-Wellendichtringen (13, 14) abgedichtet ist.

2. Drehdurchführung nach Anspruch 1, dadurch gekennzeichnet, dass die als Dichtelemente dienenden Radial-Wellendichtringe (13, 14) in den Lagerkörper (12) an seinen Aussenseiten stirnseitig frei zugänglich eingesetzt sind.

3. Drehdurchführung nach Anspruch 1, dadurch gekennzeichnet, dass der Lagerkörper (12) aus dem mit dem Lagerschild (3) verbundenen Lagergehäuse (19) und zwei beidseitig in diesem in einer zylindrischen Bohrung aufgenommenen Gleitlagern (15, 16) besteht, in welchen die Radial-Wellendichtringe (13, 14) in entsprechenden Aufnahmebohrungen eingesetzt sind.

4. Drehdurchführung nach den Ansprüchen 1 und 3, dadurch gekennzeichnet, dass der Lagerkörper (12) durch einen Metall-Axialfaltenbalg (11) an das Lagerschild (3) angeschlossen ist.

5. Drehdurchführung nach den Ansprüchen 1 und 3, dadurch gekennzeichnet, dass zwischen den beidseitig im Lagerkörper (12) aufgenommenen Gleitlagern (15, 16) eine die Verbindungswelle (4) umgebende Ölkammer (17) gebildet ist, deren Schmierölfüllung die Verbindungswelle (4) allseitig umspült.

6. Drehdurchführung nach Anspruch 5, dadurch gekennzeichnet, dass die Ölkammer (17) mittels flexibler Leitungen (22, 23) mit einem Ölausdehnungs- und Vorratsgefäss (24) verbunden ist, welches fest am Lagerschild (3) angeordnet ist.

7. Drehdurchführung nach Anspruch 5, dadurch gekennzeichnet, dass die Ölkammer (17) von einem Kühlwassermantel (18) umgeben ist, der im Lagerkörper (12) angeordnet und mittels entsprechender Leitungsverbindungen (25) an einem Wasserkühlkreislauf (26) mit Zwangsumlauf angeschlossen ist.

8. Drehdurchführung nach den Ansprüchen 5 bis 7, dadurch gekennzeichnet, dass mittels Temperaturfühlern und/oder Öl- und Wasservorratsmessern kontinuierlich die Temperatur des Kühlwassers und/oder des Schmieröls sowie/oder die Vorratsmengen des Schmieröls und/oder Kühlwassers fernüberwachbar sind und bei Überschreiten von einem der zulässigen Grenzwerte der Antrieb abschaltbar ist.

9. Drehdurchführung nach den Ansprüchen 1 und 3, dadurch gekennzeichnet, dass die Gleitlager (15, 16) mit Lagerschalen (20, 21) aus seewasserbeständigem und/oder ammoniakbeständigem Lagermetall versehen sind.

10. Drehdurchführung nach Anspruch 1, dadurch gekennzeichnet, dass der vom angeflanschten Lagerschild (3) abgedeckte Schottwandausschnitt (2) langloch- oder birnenförmig ist und das Durchstecken des Lagerschildes (3) mit der Drehdurchführung ermöglicht.

## Claims

1. Gas-tight rotary transmission passing through a bulkhead, especially for the gas-tight separation of two spaces in which there are provided a drive assembly on the one hand and a machine e.g. for working, which is driven by the drive assembly, on the other hand, having a driving shaft which is connected at the driving side and at the power take-off side by means of couplings (5, 6, 7, 8, 9) provided at its extremities and which penetrates a cutout of the bulkhead by being guided by means of an end plate (3) provided with seals and fixed flexibly relative to the bulkhead and detachably by means of flanges (5, 7), characterized in that the flanges (5, 7) at the driving side and at the power take-off side of the couplings (5, 6, 7, 8, 9), which are stiff against torsion and flexible, are connected with the cylindrical, universally even driving shaft (4) torsion-proof, but easily detachable in operation, and that they are, in case of an integrated rotary transmission passing through a bulkhead, detachable from the driving shaft, and that the body of the bearing (12) fixed at the end plate (3) in an axially and radially flexible manner can be freely displaced axially on the driving shaft (4) by means of slide bearings (15, 16) and is sealed against the driving shaft by means of rotary shaft seals (13, 14).

2. Rotary transmission according to claim 1, characterized in that the rotary shaft seals (13, 14) serving as sealing elements are inserted into the body bearing (12) at its outsides and freely accessible from the front.

3. Rotary transmission according to claim 1, characterized in that the body of the bearing (12) consists of a bearing housing (19) connected with the end plate (3) and of two slide bearings (15, 16) held on both sides in the bearing housing in a cylindrical bore, the rotary shaft seals (13, 14) being inserted into the slide bearings in corresponding location holes.

4. Rotary transmission according to claims 1 and 3, characterized in that the body of the bearing (12) is connected with the end plate (3) by means of an axial communication bellows (11) of metal.

5. Rotary transmission according to claims 1 and 3, characterized in that between the slide bearings (15, 16) held bilaterally in the body of the bearing (12) there is an oil chamber (17) surrounding the driving shaft (4), the lubricating oil filling of which floods the driving shaft (4) universally.

6. Rotary transmission according to claim 5, characterized in that the oil chamber (17) is connected by means of flexible connections (22, 23) with an oil conservator and supply vessel (24) which is provided fixedly at the end plate (3).

7. Rotary transmission according to claim 5, characterized in that the oil chamber (17) is surrounded by a cover of cooling water (18) which is provided in the body of the bearing (12) and which is connected with a cooling water cycle (26) with forced circulation by means of corresponding line connections (25).

8. Rotary transmission according to claims 5 to 7, characterized in that the temperature of the cooling water and/or of the lubricating oil as well as/or the supply quantity of the lubricating oil and/or of the cooling water are continuously remote monitored by means of thermometer probes and/or devices for measuring the oil- and water supplies and that the driving mechanism can be turned off when one of the admissible limiting values is exceeded.

9. Rotary transmission according to claims 1 and 3, characterized in that the bearings (15, 16) are provided with bearing shells (20, 21) of saltwaterproof and/or ammonia-proof bearing metal.

10. Rotary transmission according to claim 1, characterized in that the cutout of the bulkhead (2) covered by the flanged end plate (3) has the form of a long hole or a pear and makes the piercing of the end plate (3) with the rotary transmission possible.

## Revendications

1. Passage tournant de cloison étanche aux gas, destiné notamment à la séparation de deux espaces dans lesquels peuvent se situer d'un côté un équipement moteur et d'autre côté une machine p.ex. à travail actionnée par celui-ci, ayant un arbre de transmission qui est raccordé du côté de commande et du côté de sortie moyennant des dispositifs d'accouplement (5, 6, 7, 8, 9) prévus à ses extrémités et qui pénètre une découpure de la cloison en étant guidé par une flasque (3) munie de garnitures et fixée de façon souple par rapport à la cloison et de façon détachable moyennant des brides (5, 7), caractérisé en ce que les brides (5, 7) du côté de commande et du côté de sortie des dispositifs d'accouplement (5, 6, 7, 8, 9) rigides à la torsion et souples à la flexion sont raccordés à l'arbre de transmission invariablement lisse et cylindrique (4) de manière résistant à la torsion mais facile à détacher pour le fonctionnement et que dans le cas d'un passage tournant de cloison intégré elles sont détachables de celui-ci et que le corps de palier (12) fixé à la flasque (3) de manière axialement et radialement souple est axialement déplaçable librement sur l'arbre de transmission (4) moyennant des paliers-glisseur (15, 16) et qu'il est rendu étanche envers celui-ci moyennant des bagues à lèvres avec ressort (13, 14).

2. Passage tournant selon la revendication 1, caractérisé en ce que les bagues à lèvres avec ressort (13, 14) servant d'éléments d'étoupage sont placées dans le corps de palier (12) aux côtés extérieurs de manière accessible sur la face.

3. Passage tournant selon la revendication 1, caractérisé en ce que le corps de palier (12) est constitué par le logement du palier (19) lié à la flasque (3) et deux paliers-glisseur (15, 16) accueillés bilatéralement de celui-ci par un alésage cylindrique, dans les paliers-glisseur étant mises les bagues à lèvres avec ressort (13, 14) dans les alésages correspondants.

4. Passage tournant selon les revendications 1 et 3, caractérisé en ce que le corps de palier (12) est raccordé à la flasque (3) par un soufflet d'intercirculation axial en métal (11).

5. Passage tournant selon les revendications 1 et 3, caractérisé en ce que entre les paliers-glisseur (15, 16) accueillés bilatéralement dans le corps de palier (12) se trouve une chambre d'huile (17) entourant l'arbre de transmission (4) dont le remplissage de huile lubrifiante baigne l'arbre de transmission (4) de tous les côtés.

6. Passage tournant selon la revendication 5, caractérisé en ce que la chambre d'huile (17) est liée moyennant des raccords flexibles (22, 23) à un conservateur d'huile et réservoir (24) qui est prévu à la flasque (3) de manière fixe.

7. Passage tournant selon la revendication 5, caractérisé en ce que la chambre d'huile (17) est entourée d'une chemise d'eau réfrigérante (18) qui se trouve dans le corps de palier (12) et qui est raccordée à un cycle d'eau réfrigérante (26) avec circulation forcée moyennant des raccordements de conduite correspondants (25).

8. Passage tournant selon les revendications 5 à 7, caractérisé en ce que la température de l'eau réfrigérante et/ou de l'huile lubrifiante ainsi que la quantité de réserve en huile lubrifiante et/ou en eau réfrigérante sont constamment télésurveillés moyennant des sondes de température et/ou un mesureur d'approvisionnement en eau et en huile et qu'au moment d'un dépassement d'une des valeurs limites admissibles le mécanisme de commande peut être débranché.

9. Passage tournant selon les revendications 1 et 3, caractérisé en ce que les paliers-glisseur (15, 16) sont munis de coquilles de coussinet (20, 21) en métal antifriction résistant à l'eau de mer et/ou à l'ammoniac.

10. Passage tournant selon la revendication 1, caractérisé en ce que la découpure (2) de la cloison couverte par la flasque fixée par bride (3) présente la forme d'un trou longitudinal ou d'une poire et rend possible le percement de la flasque (3) avec le passage tournant.

FIG,1

FIG.2

1

3

FIG. 3

2

4

13

15

12

FIG. 4

FIG.5